# EUROPEAN PATENT APPLICATION

(11) **EP 2 650 831 A1**
(43) Date of publication of application: **16.10.2013**
(21) Application number: 12305431.4
(22) Date of filing: 12.04.2012
(51) Int. Cl.: G06Q 10/06, G06Q 50/06

(54) **A method for determining an electricity consumption profile of a facility and a system**

(71) Applicant: Thomson Licensing, 92130 Issy-les-Moulineaux (FR)
(72) Inventor: Hegde, Nidhi, 75005 Paris (FR); Massoulié, Laurent, 92420 VAUCRESSON (FR); Le Guyadec, Pascal, 92210 Saint Cloud (FR); Hours, Hadrien, 13180 GIGNAC LA NERTHE (FR)
(74) Representative: Lindemann, Robert

(57) **Abstract**

A method for determining an electricity consumption profile of a facility, the method comprises determining a time-dependent course of an aggregate electricity consumption of the facility over a time period. A set of several individual consumption profiles is provided in a database that is connected to a data processing unit. Each individual consumption profile comprises a time-dependent course of an electricity consumption of an electrical device over a time interval, wherein the time interval is equal or smaller than the time period. A subset of individual consumption profiles is determined by the data processing unit, the subset comprising the individual consumption profiles that fit best to the time-dependent course of the aggregate electricity consumption over the time period.

## Description

The invention relates to a method for determining the detailed electricity consumption profile of a facility and a system.

### Background of the invention

With rising energy costs initiatives for optimal control and management of energy consumption and distribution in an electricity grid, in particular a smart grid, have become increasingly widespread. A further (principal) aim of electricity grid control is the shaving of load peaks as to avoid excessive instantaneous demands leading to blackouts.

For example, household electricity consumption represents a significant portion of the load on the electricity grid and cyclic demand patterns of household consumption can lead to large peaks in the electricity grid load. Thus, household energy management is a critical aspect of control in smoothing consumption peaks. It is in a grid operator's interest to identify household electricity load at a granularity as fine as possible in order to encourage users to shift demand appropriately. On the other hand, with rising electricity costs, it is also in the interest of the users to identify load sources so as to control energy consumption. A household user is better able to adapt consumption if he has sufficient detail about his energy demands: consumption per appliance along with duration and frequency of use, for example. Indeed this level of information is beneficial not only for consumption shaping, but also for demand forecast. But, deploying individual meters per appliance to acquire such detailed information is unrealistic due to costs and lack of an overall vision of household energy use.

Some studies of appliance profiling relate to a manual identification of activity patterns [1], neural network classification techniques [2] and machine learning techniques such as SVM [3]. Clearly, a manual identification is cumbersome for the user. Techniques that use neural network concepts involve high complexity and a fairly long and elaborate training period. The SVM technique can be quite expensive in computation and uses electrical noise caused by appliances rather than actual power consumption data, adding some inaccuracies in measurement. The use of additional sensors and meters is counter to a household's goal of a simple and inexpensive metering system.

[1] Taherian, S., Pias, M., Coulouris, G. and Crowcroft, J., "Profiling Energy Use in Households and Offices", in Proc. of the First ACM SIGCOMM International Conference On Energy-efficient Computing and Networking, April 2010, Passau, Germany.

[2] Ruzelli, A. G., Nicolas, C., Schoofs, A., O'Hare, G. M. P., "Real Time Recognition and Profiling of Appliances through a Single Electricity Sensor", in Proc. of the IEEE Secon, 2010.

[3] Patel, S. N., Robertson, T., Kientz, J. A., Reynolds, M. S., Abowd, G. D., "At the Flick of a Switch: Detecting and Classifying Unique Electrical Events on the Residential Power Line", Proc. Ubicomp 2007.

### Summary of the invention

It is the object of the invention to provide improved technologies for determining instants of time and time periods of electricity consumption of electrical devices of a facility.

This object is solved by a method according to the independent claim 1 and a system according to the independent claim 13. Advantageous embodiments of the invention are the subject of dependent claims.

According to one aspect of the invention a method for determining an electricity consumption profile of a facility is provided, the method comprising the following steps:
- determining a time-dependent course of an aggregate electricity consumption of the facility over a time period,
- providing a set of several individual consumption profiles in a database that is connected to a data processing unit, wherein each individual consumption profile comprises a time-dependent course of an electricity consumption of an electrical device over a time interval, wherein the time interval is equal or smaller than the time period, and
- determining a subset of individual consumption profiles comprising the individual consumption profiles that fit best to the time-dependent course of the aggregate electricity consumption over the time period by the data processing unit.

According to another aspect of the invention a system for determining an electricity consumption profile of a facility is provided, comprising
- a data processing unit,
- a meter that is configured to measure a time-dependent course of an aggregate electricity consumption of the facility over a time period and to transmit the measured consumption to the data processing unit, and
- a database connected to the data processing unit that comprises a set of several individual consumption profiles, wherein each individual consumption profile comprises a time-dependent course of an electricity consumption of an electrical device over a time interval, wherein the time interval is equal or smaller than the time period,
wherein the data processing unit is configured to determine a subset of individual consumption profiles comprising the individual consumption profiles that fit best to the time-dependent course of the aggregate electricity consumption over the time period.

Energy consumption data of a facility is determined in form of a time-dependent course of aggregate electricity consumption, for example a time series. An analysis of the data includes the identification of activity patterns of electrical devices. The data is analyzed, specifically, disaggregated into the various individual consumption profiles which are identified and associated to the electrical devices. Thus, the invention makes it possible to provide detailed consumption information related to the electrical devices based solely on the aggregate electricity consumption of the facility.

The facility can be a household. If so, the electrical devices can be appliances, for example a refrigerator, a hair dryer or a washing machine. Otherwise, the facility can be an office building, wherein the electrical devices are a computer, a computer monitor or a printer, for example.

The individual consumption profiles of the electrical devices can be provided by a manufacturer of the respective device. Complementary or alternatively, an individual consumption profile can be provided by a user, for example by measuring the electricity consumption of one electrical device over a time interval. Different individual consumption profiles can be related to the same electrical device. For example, a washing machine usually provides various washing programs with different temperatures, wherein each program runs for a certain time interval and results in a specific electricity consumption, respectively. Therefore, for each program of the washing machine a specific individual consumption profile can be provided.

The electricity consumption profile of the facility comprises data about the electrical devices that actually consume electricity as well as the instants of time and the time periods of the electricity consumption for each electrical device of the facility. Based on the detailed electricity consumption profile a user can evaluate options to reduce peaks of the consumption. For example, a schedule for switching on and off each electrical device in a certain sequence and for a specific time period can be created. In another example, the electrical devices can be operated by a remote control, e.g. a modulated audio ripple controller, a (wireless) local area network, a Bluetooth connection or a mobile phone standard like the global system for mobile communication (GSM). The user can be motivated to change the consumption profile of the facility by a load-dependent electricity tariff that is expensive at high load periods and cheap at low load periods.

In a preferred embodiment, the method further comprises outputting the subset of individual consumption profiles to an interface. Hereby, a resident of a household has detailed information about the electricity consumption in his household, for example. Activity patterns of appliances can easily be determined making it possible to optimize the consumption by shifting a usage of the appliances.

According to a further embodiment, the step of determining the subset of individual consumption profiles comprises determining changes in amplitude of the time-dependent course of the aggregate electricity consumption. An instant of time when the amplitude of the consumption changes can be related to a point of special interest for determining the individual consumption profiles. For example, an increase of the amplitude can be related to a power-on of an electrical device and a decrease of the amplitude can be caused by a power-off of an electrical device.

In still another preferred embodiment, for each change in amplitude a size of the change and / or a duration until a further change in amplitude is determined, respectively. Hereby, additional information about the aggregate electricity consumption is provided.

In a further embodiment, each individual consumption profile of the set of several individual consumption profiles is divided into several phases, respectively. The phases can be related to different operating modes of an electrical device, respectively, wherein each operating mode leads to a different consumption of electricity for a specific duration. For example, for a washing machine, a first phase comprises pumping of water in the machine. Afterwards, the water is heated to a certain temperature which is associated with a second phase. A third phase can refer to a spin-drying in the washing machine.

In still a further embodiment of the invention, each change in amplitude of the time-dependent course of the aggregate electricity consumption is associated either with a beginning of one of the individual electricity consumption profiles or with a beginning of a phase of one of the individual electricity consumption profiles, respectively.

In a preferred embodiment, the changes in amplitude of the aggregate electricity consumption are mapped to a Hidden Markov Model for determining the phase of one of the individual electricity consumption profiles that fits best to the change in amplitude.

In another preferred embodiment, the changes in amplitude of the aggregate electricity consumption are mapped to a weighed bipartite graph for determining the phase of one of the individual electricity consumption profiles that fits best to the change in amplitude.

According to a further embodiment, the aggregate electricity consumption is provided by a meter measuring the time-dependent course of the aggregate electricity consumption of the facility over the time period. Since detailed consumption information is retrieved from the aggregate consumption, only a single meter is necessary for the facility. Hereby, costs are kept low and installation effort is small.

In still a preferred embodiment, the aggregate electricity consumption is provided by measuring at least one of the following quantities with the meter: a current, a voltage, a real power, a reactive power and a power factor.

According to another further embodiment, the aggregate electricity consumption is measured as a dimensionless quantity or in at least one of the following units: watt and volt-ampere.

In a further embodiment of the invention, the set of several individual consumption profiles comprises exclusively the individual consumption profiles of the electrical devices that are available at the facility. Hereby, the computational effort to determine the subset of the individual consumption profiles that fits best to the aggregate electricity consumption is reduced.

### Description of preferred embodiments of the invention

Following, the invention will be described in further detail, by way of example, with reference to different embodiments. In the figures show:
- Fig. 1: an aggregate electricity consumption of a household for a duration of 48 hours and
- Fig. 2: four examples of individual consumption profiles of various electrical devices.

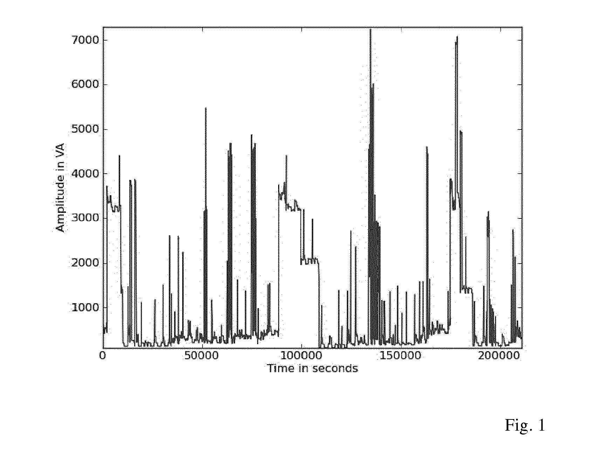

A household is equipped with a power meter and a gateway. The meter collects aggregate electricity consumption over time through measurement of current, voltage, real power, reactive power, or the power factor. The data collected is in the form of a time series, of a scale corresponding to a sampling frequency of the measurement, and of units corresponding to the type of information sampled: watt, volt-ampere, or dimensionless. An example of a measured aggregate electricity consumption of the household over a time period of 48 hours is shown in Fig. 1.

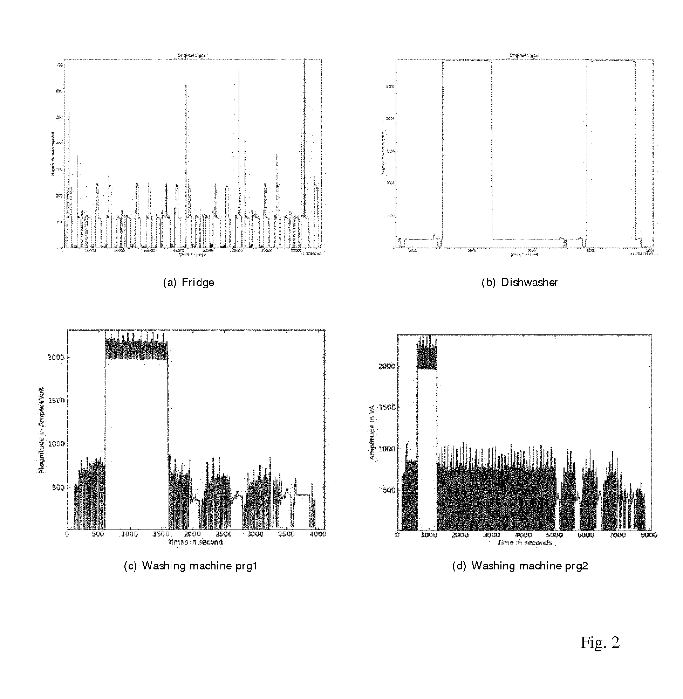

Individual consumption profiles for appliances will be either provided by the respective appliance manufacturer or user-provided profiles will be available from a collaborative database. This database can be shared among a group of trusted households. Each household may upload a new individual consumption profile for an appliance to the database and / or search the database for a new unknown profile. Four examples of individual consumption profiles for a fridge, a dishwasher and a washing machine are given in Fig. 2. For the washing machine two individual consumption profiles are provided that relate to two different programs of the machine.

Many individual consumption profiles have basic units, or components that repeat periodically (such as a refrigerator) or are combined with other components to produce a given profile (such as a given program of a washing machine). Therefore, for a specific appliance, first, various phases are identified and then the phases are combined into an individual consumption profile of the specific appliance.

The data collected by the meter is communicated to a data processing unit in the gateway. An analysis of the aggregate consumption data starts with a refinement of the data. If the sampling rate is fast, such as a measurement every 5 seconds, some unimportant transient phases may appear in the data. These isolated high peaks are considered noise and are removed. Next, instants of time of significant changes in amplitude are identified. The instants may correspond to a power-on or a power-off of an appliance or a phase of an appliance. Once the data is processed into a form that comprises of instants of time of changes in amplitude, size of change in amplitude, and duration until a next change of amplitude, the corresponding phases are identified. For this, one of the following algorithms can be chosen:
a) Identification based on Hidden Markov Models
   The transitions of the appliances between the "ON" states and "OFF" states are modeled as a Markov process with explicit duration of states. A modified version of the Viterbi algorithm is then applied to the time series of instants of change in amplitude of electricity consumption, to uncover the most-likely underlying transitions of appliance states that explain this time series. The modified Viterbi algorithm includes the duration of the states in the definition of states to be applicable here.
b) Identification based on a bipartite matching problem
   The instants of changes in amplitude are modeled as vertices of a weighted bipartite graph, where a positive change in amplitude labels the instant as a vertex in set X and a negative change labels the instant as a vertex in set Y. An edge between a vertex *x* ∈ *X* and a vertex *y* ∈ *Y* corresponding to instants of time *tᵢ, tⱼ,* respectively, will carry a weight proportional to the probability that the two instants are related to the switching on and off, respectively, of a given appliance phase. For example, the edge weight is Pr[*D_{Pk} = tⱼ - tᵢ*], wherein phase *Pₖ* is such that The Hungarian algorithm is applied to find the maximum matching of this weighted bipartite graph. An edge between two vertices in this matching then identifies a phase for the corresponding duration. In such a way, the most likely sequence of phases is identified, which can then be grouped into the appropriate individual consumption profiles for the appliances.

## Claims

1. A method for determining an electricity consumption profile of a facility, the method comprising the following steps:
- determining a time-dependent course of an aggregate electricity consumption of the facility over a time period,
- providing a set of several individual consumption profiles in a database that is connected to a data processing unit, wherein each individual consumption profile comprises a time-dependent course of an electricity consumption of an electrical device over a time interval, wherein the time interval is equal or smaller than the time period, and
- determining a subset of individual consumption profiles comprising the individual consumption profiles that fit best to the time-dependent course of the aggregate electricity consumption over the time period by the data processing unit.

2. The method according to claim 1, **characterized by** outputting the subset of individual consumption profiles to an interface.

3. The method according to claim 1 or 2, **characterized in that** the step of determining the subset of individual consumption profiles comprises determining changes in amplitude of the time-dependent course of the aggregate electricity consumption.

4. The method according to claim 3, **characterized by** determining for each change in amplitude a size of the change and / or a duration until a further change in amplitude, respectively.

5. The method according to any one of the preceding claims, **characterized in that** each individual consumption profile of the set of several individual consumption profiles is divided into several phases, respectively.

6. The method according to at least claims 3 and 5, **characterized in that** each change in amplitude of the time-dependent course of the aggregate electricity consumption is associated either with a beginning of one of the individual electricity consumption profiles or with a beginning of a phase of one of the individual electricity consumption profiles, respectively.

7. The method according to claim 6, **characterized by** mapping the changes in amplitude of the aggregate electricity consumption to a Hidden Markov Model for determining the phase of one of the individual electricity consumption profiles that fits best to the change in amplitude.

8. The method according to claim 6, **characterized by** mapping the changes in amplitude of the aggregate electricity consumption to a weighed bipartite graph for determining the phase of one of the individual electricity consumption profiles that fits best to the change in amplitude.

9. The method according to any one of the preceding claims, **characterized in that** the aggregate electricity consumption is provided by a meter measuring the time-dependent course of the aggregate electricity consumption of the facility over the time period.

10. The method according to claim 9, **characterized in that** the aggregate electricity consumption is provided by measuring at least one of the following quantities with the meter: a current, a voltage, a real power, a reactive power and a power factor.

11. The method according to claim 9 or 10, **characterized in that** the aggregate electricity consumption is measured as a dimensionless quantity or in at least one of the following units: watt and volt-ampere.

12. The method according to any one of the preceding claims, **characterized in that** the set of several individual consumption profiles comprises exclusively the individual consumption profiles of the electrical devices that are available at the facility.

13. A system for determining an electricity consumption profile of a facility, comprising
- a data processing unit,
- a meter that is configured to measure a time-dependent course of an aggregate electricity consumption of the facility over a time period and to transmit the measured consumption to the data processing unit, and
- a database connected to the data processing unit that comprises a set of several individual consumption profiles, wherein each individual consumption profile comprises a time-dependent course of an electricity consumption of an electrical device over a time interval, wherein the time interval is equal or smaller than the time period,
wherein the data processing unit is configured to determine a subset of individual consumption profiles comprising the individual consumption profiles that fit best to the time-dependent course of the aggregate electricity consumption over the time period.

14. The system according to claim 13, characterized further by comprising an interface that is configured to output the subset of individual consumption profiles.
